# EUROPEAN PATENT SPECIFICATION

(11) **EP 3 382 563 B1**
(45) Date of publication and mention of the grant of the patent: **09.10.2019**
(21) Application number: 15909302.0
(22) Date of filing: 27.11.2015
(51) Int. Cl.: G06F 13/00, H04L 29/08, H04W 4/38, H04W 4/70

(54) **COMMUNICATION DEVICE, COMMUNICATION SYSTEM, COMMUNICATION METHOD, AND COMMUNICATION PROGRAM**
KOMMUNIKATIONSVORRICHTUNG, KOMMUNIKATIONSSYSTEM, KOMMUNIKATIONSVERFAHREN UND KOMMUNIKATIONSPROGRAMM
DISPOSITIF DE COMMUNICATION, SYSTÈME DE COMMUNICATION, PROCÉDÉ DE COMMUNICATION ET PROGRAMME DE COMMUNICATION

(43) Date of publication of application: 03.10.2018
(73) Proprietor: Fujitsu Limited, Kawasaki-shi, Kanagawa 211-8588 (JP)
(72) Inventor: OKAYAMA, Shigeyuki, Kawasaki-shi Kanagawa 211-8588 (JP); TERASAKI, Takashi, Kawasaki-shi Kanagawa 211-8588 (JP); NAGATOSHI, Hideyuki, Kawasaki-shi Kanagawa 211-8588 (JP); YAMAMURA, Kazuyuki, Kawasaki-shi Kanagawa 211-8588 (JP); SAITO, Masayuki, Fukuoka-shi Fukuoka 814-8588 (JP)
(74) Representative: Haseltine Lake Kempner LLP
(86) International application number: PCT/JP2015/083406
(87) International publication number: WO 2017/090185

(56) References cited:
- JP-A- 2004 021 319
- JP-A- 2009 519 509
- US-A1- 2012 117 168

## Description

### FIELD

The embodiments discussed herein are related to a communication device, and a communication system and a communication method that use the communication device.

### BACKGROUND

Due to the widespread use of communication equipment, IoT (Internet of things) in which various devices are connected to a network so as to perform communication has attracted attention, and systems that provide various services have been devised. For example, a remote monitoring system may be provided by causing various devices connected to a network to communicate with an application server. In the remote monitoring system, a communication device that includes a camera and is provided in a location in which an image of a monitoring target can be captured uploads data obtained by performing image-capturing to the application server as needed. Then, the application server reports to communication equipment, such as a cell phone, a tablet, or a computer, used by a user that an image-capturing result has been obtained. When the user receives a report from the application server, the user accesses the application server so as to confirm the image-capturing result as needed. The data uploaded to, for example, the application server may be any data other than an image-capturing result. Further, the system using IoT may be any system other than a remote monitoring system.

MQTT (message queue telemetry transport) has attracted attention as a communication protocol used in a system using IoT. The MQTT has a short header length, so a load imposed on a device due to processing performed when a data amount in a payload is small is light. Thus, the MQTT is suitable for use in a communication performed between a large number of devices.

As a related technology, a system that includes a publish/subscribe broker that relays data transmitted between a service provider network and a user device. Further, a camera has been devised that transmits data of a low-resolution live view image to a terminal using a UDP (user datagram protocol), and transmits data of a high-resolution still image that is captured according to an instruction to capture a still image when the instruction is obtained. A TCP (transmission control protocol) is used to transmit data of a high resolution still image. Further, a data transmission method for performing authentication has been proposed, wherein an identification phrase is generated by a facsimile apparatus using an SIP (session initiation protocol) and identification phrases are exchanged between the image-data transmission side and the image-data reception side.

For example, documents such as Japanese National Publication of International Patent Application No. 2015-500520, Japanese Laid-open Patent Publication No. 2015-095799, and Japanese Laid-open Patent Publication No. 2008-263440 are known.

When a control message destined for a device is transmitted from a server using a non-publish/subscribe protocol, a communication error will occur if the device is not connected to the server. However, when a communication path that provides a transfer rate suitable for data communication is constantly maintained between the device and the server, the communication path is maintained needlessly when data communication is not performed, which results in decreasing the efficiency in data communication. The problem becomes more serious when the number of devices connected to a network is increased. On the other hand, the publish/subscribe protocol is not suitable for a transmission of high capacity data. Thus, if the publish/subscribe protocol is used for data communication, the efficiency in data communication may be decreased. Further, even if any of the related technologies described above is used, it will still be difficult to improve the efficiency in communication due to the problem described above.

Reference may be made to US 2012/117168 A1, which relates to a method and apparatus for enabling device communication and control using XMPP.

### SUMMARY

In one aspect, an object of the present invention is to improve the efficiency in communication.

The present invention is defined by the independent claims, to which reference should now be made. Specific embodiments are defined in the dependent claims. As disclosed herein, a communication device includes a receiver, a controller, and a transceiver. The receiver receives a control message from a connection destination device that is connected to the communication device through a first session using a first protocol. The controller performs processing specified by the control message and establishes a second session between the communication device and a communication destination device for a communication using a second protocol when communication processing that occurs due to the processing specified by the control message is performed using the second protocol, a header length of the second protocol being longer than a header length of the first protocol. The transceiver performs communication using the first session and the second session. The controller terminates the second session when the communication using the second protocol is terminated. The transceiver reports a result of the processing specified by the control message to the communication destination device through the first session.

### BRIEF DESCRIPTION OF DRAWINGS

FIG. 1 illustrates an example of a communication according to embodiments;
FIG. 2 illustrates an example of a configuration of a communication device;
FIG. 3 illustrates an example of a hardware configuration of the communication device;
FIG. 4 illustrates an example of a configuration of an application server;
FIG. 5 illustrates an example of a system using the communication according to the embodiments;
FIG. 6 illustrates an example of a registered information table;
FIG. 7 illustrates an example of a management information table;
FIG. 8 is a sequence diagram that illustrates an example of processing performed when data is uploaded to the server;
FIG. 9 is a flowchart that illustrates an example of processing performed in the server when a control message is transmitted;
FIG. 10 is a flowchart that illustrates an example of processing performed in an MQTT server;
FIG. 11 is a flowchart that illustrates an example of processing performed in the communication device;
FIG. 12 is a flowchart that illustrates an example of processing in the server when a response message is received;
FIG. 13 is a sequence diagram that illustrates an example of processing performed when data is downloaded from the server; and
FIG. 14 is a flowchart that illustrates an example of download processing performed in the communication device.

### DESCRIPTION OF EMBODIMENTS

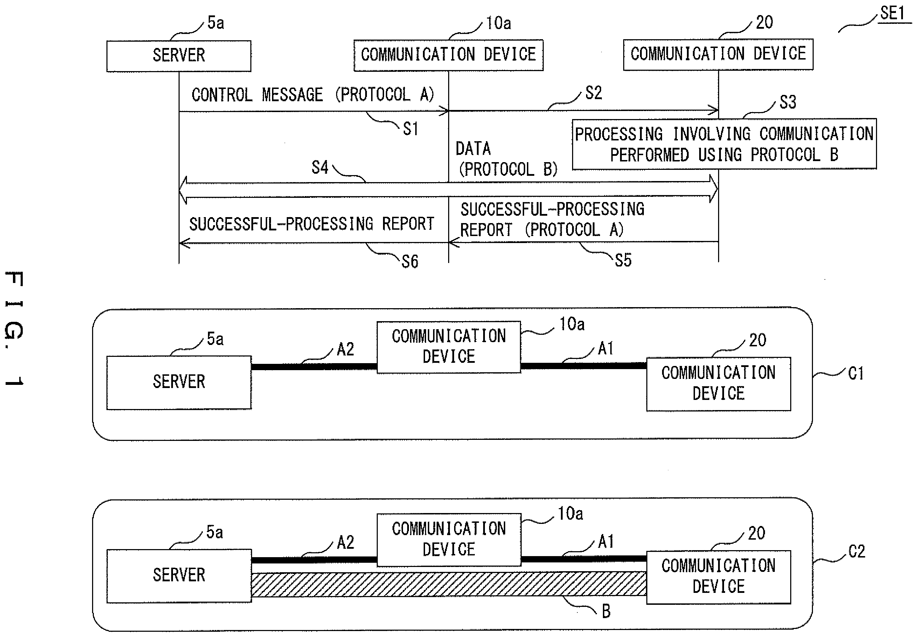

FIG. 1 illustrates an example of a communication according to embodiments. In the example illustrated in FIG. 1, it is assumed that a network includes a server 5a, a communication device 10a, and a communication device 20.

Case C1 indicates a connection state when Sequence SE1 is started. In Case C1, a communication session A2 is generated between the server 5a and the communication device 10a, and a communication session A1 is generated between the communication device 10a and the communication device 20. It is assumed that, in the sessions A1 and A2, a communication using a first protocol (protocol A) is performed. It is also assumed that the protocol A is a protocol that has a relatively short header length and in which a processing load is relatively light when the payload length is short. The communication sessions A1 and A2 are used when a control message that is used to perform transmission of control information between the server 5a and the communication device 20 is transmitted using the protocol A. When the protocol A is a publish/subscribe protocol, the communication device 10a may operate as a broker. In Sequence SE1, the communication device 10a operates as a broker.

Sequence SE1 indicates an example of a communication performed between the server 5a and the communication device 20. Using the communication session A2, the server 5a transmits, to the communication device 10a, a control message that is destined for the communication device 20 and generated in the protocol A (Step S1) . The communication device 10a transfers the received control message to the communication device 20 using the communication session A1 (Step S2).

When the communication device 20 receives a control message, the communication device 20 performs processing requested by the control message. Here, it is assumed that the processing requested by the control message involves a communication using the protocol B. For example, it is assumed that the protocol B has a header length longer than a header length of the protocol A and is suitable for transferring high capacity data. Then, the communication device 20 performs the processing requested by the control message and establishes a communication session (session B) that uses the protocol B between the communication device 20 and the server 5a in order to use the session B for a communication that occurs due to the requested processing (Step S3).

Case C2 indicates an example of a connection state when the session B is established by the process of Step S3. In order to transmit a control message using the protocol A, the session A1 and A2 also remain maintained when the session B is available . The session B is used to perform data communication between the server 5a and the communication device 20, so the path used for a communication through the session B is a path that provides a transfer rate at which data communication is performed properly.

When the session B is established, the communication device 20 transmits/receives data to/from the server 5a using the protocol B (Step S4). In the example illustrated in FIG. 1, it is assumed that the data transmission using the protocol B has been terminated normally. When the communication using the protocol B due to the processing requested by the control message is terminated, the communication device 20 terminates the session B between the communication device 20 and the server 5a. Thus, when the communication using the protocol B that occurs due to the processing requested by a control message is terminated, the state between the server 5a and the communication device 20 returns to a state in which only the session used for a communication using the protocol A is established.

The communication device 20 transmits a successful-processing report to the communication device 10a through the session A1, the successful-processing report reporting to the server 5a that processing has been successfully performed (Step S5). The communication device 10a transfers the received successful-processing report to the server 5a through the session A2 (Step S6). Here, the successful-processing report transmitted in Steps S5 and S6 is also an example of the control message, so the successful-processing report is transmitted using the protocol A.

As described with reference to FIG. 1, in the method according to the embodiments, the sessions A1 and A2 are used when a control message is transmitted between the server 5a and the communication device 20. A payload amount in a control message is less than that in a data packet, and the protocol A is used for a transmission of a control message. Thus, there is less data traffic even if a constant connection is established between the server 5a and the communication device 20 for a transmission of a control message. Thus, even if a communication path used for a communication through the sessions A1 and A2 is maintained, the load imposed on a network is lower than that in the case in which a session used for data communication is constantly established. Further, when communication processing using the protocol B occurs due to, for example, a transmission of relatively large amount of data being requested by a control message obtained through the sessions A1 and A2, the session B for the protocol B is established only during a communication using the protocol B. Thus, when the method according to the embodiments is used, network resources used to perform transfer processing in a network are used more efficiently, compared to the case in which a path for data transmission is constantly maintained between a server and a communication device. Further, the protocol B is a protocol suitable for data transfer, so it is also possible to prevent the efficiency in data communication from being decreased.

As in the example of FIG. 1, when the communication device 10a that operates as a broker relays a transmission of a control message between the server 5a and the communication device 20 using the sessions A1 and A2, there occurs no communication errors even if the server 5a and the communication device 20 are not constantly connected to each other. This results in further improving the efficiency in the system.

### <Device Configuration>

An example in which a system using the communication method according to the embodiments is a remote monitoring system and the communication device 20 can capture a still image and a video is described below. A type of system and processing performed by the communication device 20 that are described below are just examples. The system according to the embodiments may be used in a system other than a remote monitoring system. Further, the communication device 20 may perform processing other than image-capturing processing according to a request made by a server in a system.

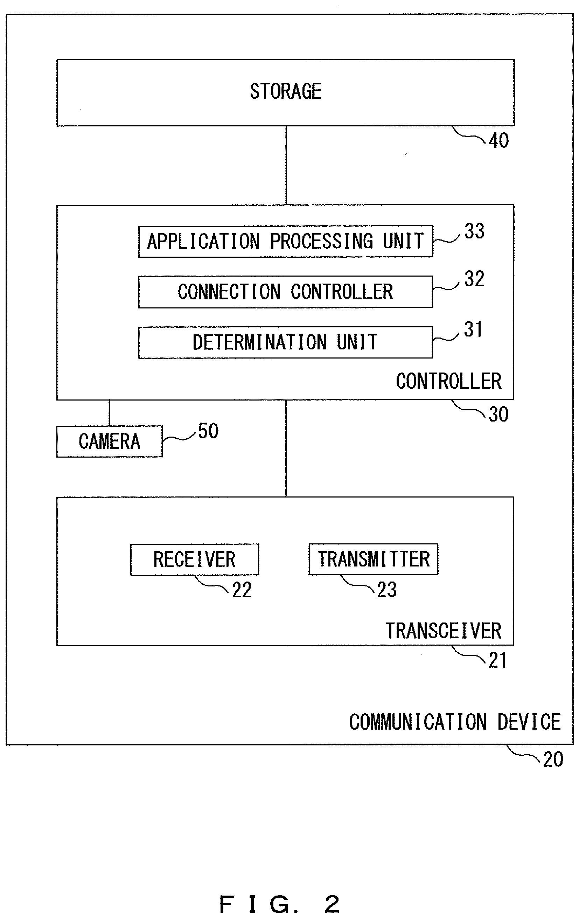

FIG. 2 illustrates an example of a configuration of the communication device 20. The communication device 20 includes a transceiver 21, a controller 30, a storage 40, and a camera 50. The transceiver 21 includes a receiver 22 and a transmitter 23. The controller 30 includes a determination unit 31, a connection controller 32, and an application processing unit 33.

The receiver 22 receives a packet from a device other than the communication device 20. The transmitter 23 transmits a packet to a device other than the communication device 20. The receiver 22 and the transmitter 23 can process both a packet using a first protocol and a packet using a second protocol. It is assumed that a control message is transmitted using the first protocol. It is also assumed that the second protocol is more suitable than the first protocol for a communication of high capacity data.

The determination unit 31 analyzes a control message obtained through the receiver 22, so as to determine whether communication processing using the second protocol occurs due to processing requested by the control message. The determination unit 31 may store therein, in advance, a type of processing in which communication processing using the second protocol occurs. In this case, the determination unit 31 performs the determination processing using a type of the processing requested by the control message and the stored information. Further, when a specific information element is included in a control message, the determination unit 31 may determine that communication processing using the second protocol occurs due to processing requested by the control message.

When communication processing using the second protocol occurs, the connection controller 32 performs processing of connecting with a communication destination device for a communication using the second protocol. Further, when the communication processing using the second protocol is terminated, a session and a connection for communicating with the communication destination device using the second protocol is terminated. The application processing unit 33 performs processing requested by the control message. The camera 50 is controlled by the application processing unit 33 and generates image data with respect to a monitoring target and a monitored region that are to be monitored by the communication device 20. The storage 40 stores therein, as needed, data used for processing performed by the controller 30.

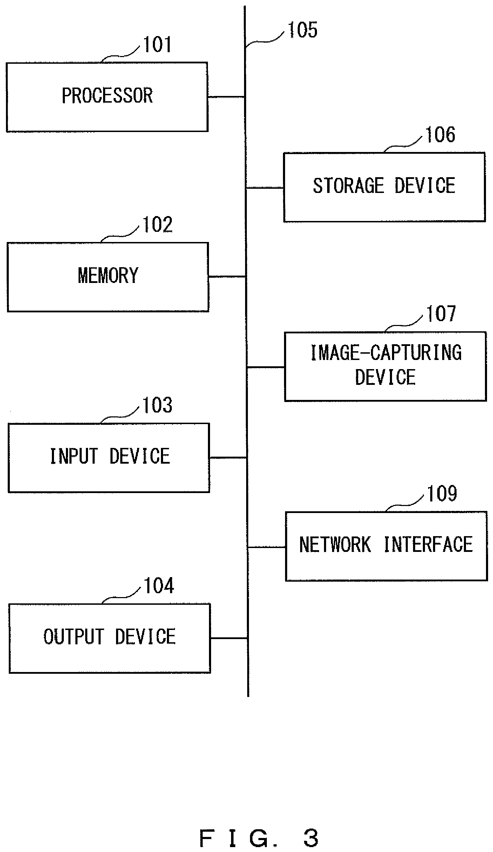

FIG. 3 illustrates an example of a hardware configuration of the communication device 20. The communication device 20 includes a processor 101, a memory 102, a bus 105, an image-capturing device 107, and a network interface 109. The communication device 20 may further include at least one of an input device 103, an output device 104, and a storage device 106. The processor 101 is an arbitrary processing circuit including a central processing unit (CPU), and can execute a program stored in the memory 102 and the storage device 106. The controller 30 is implemented by the processor 101. The memory 102 and the storage device 106 operate as the storage 40. The transceiver 21 is implemented by the network interface 109 and the processor 101. The processor 101, the memory 102, the input device 103, the output device 104, the storage device 106, the image-capturing device 107, and the network interface 109 are connected to one another through the bus 105 so that each can output data to and receive an input of data from the others. The input device 103 is an arbitrary device, such as a keyboard and a mouse, that is used to input information, and the output device 104 is an arbitrary device, such as a display device including a display, that is used to output data. The image-capturing device 107 operates as the camera 50.

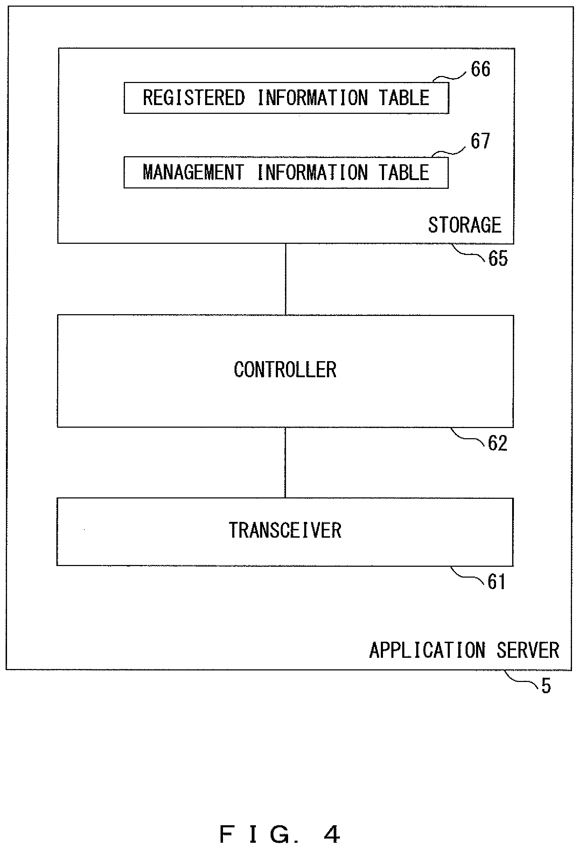

FIG. 4 illustrates an example of a configuration of an application server 5. The server 5a of FIG. 1 is an example of the application server 5. The application server 5 includes a transceiver 61, a controller 62, and a storage 65. The transceiver 61 communicates with other devices such as the communication device 20. The controller 62 processes an application provided by the application server 5, and also performs control processing such as a generation of a session as needed. The storage 65 includes a registered information table 66 and a management information table 67. Information on a user who uses an application provided by the application server 5 is registered in the registered information table 66. Management information that is used to make a request for the communication device 20 to perform processing requested by the user or used to report a processing result to a terminal 15 of the user is registered in the management information table 67. Examples of the registered information table 66 and management information table 67 will be described later.

The hardware configuration of the application server 5 is similar to the hardware configuration of the communication device 20 illustrated in FIG. 3, but there is no need to include the image-capturing device 107 in the application server 5. In other words, the application server 5 includes the processor 101, the memory 102, the bus 105, and the network interface 109, and may optionally include at least one of the input device 103, the output device 104, and the storage device 106. Further, the application server 5 may also include the image-capturing device 107.

In the application server 5, the processor 101 operates as the controller 62, the memory 102 and the storage device 106 operate as the storage 65. Further, the transceiver 61 is implemented by the network interface 109 and the processor 101.

### <Embodiments>

An example in which the first protocol is MQTT and the second protocol is HTTP (hypertext transfer protocol) is described below. It is assumed that the server 5a is the application server 5 in a remote monitoring system and the communication device 10a is an MQTT server 10. The protocols used in communication are examples, and a used protocol may be changed according to the implementation. In other words, the first protocol is not limited to MQTT and the second protocol is not limited to HTTP. For example, FTP (file transfer protocol) may be used as the second protocol. Anything/anyone may be a monitoring target monitored by a remote monitoring system. For example, the monitoring target may be a companion animal or an elderly person taken care of by a user, or it may be machinery in a production line whose state will be confirmed by the user.

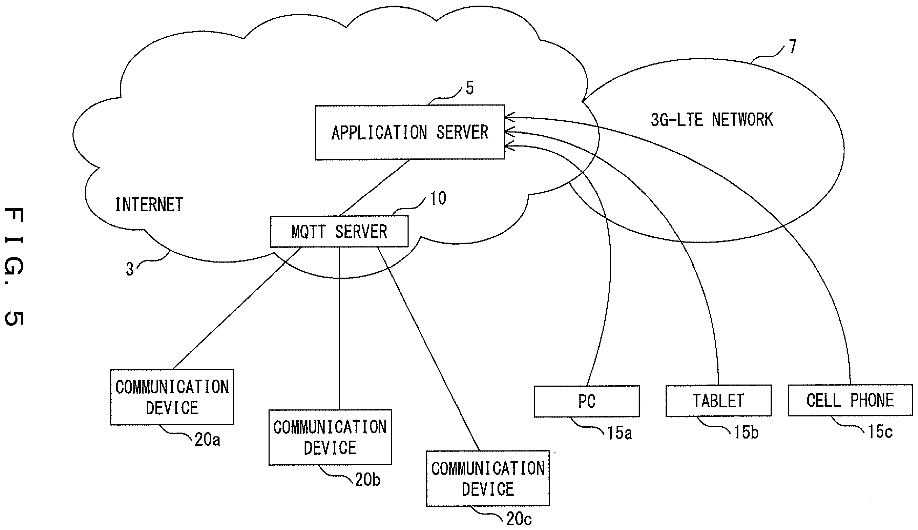

FIG. 5 illustrates an example of a system using the communication according to the embodiments. FIG. 5 illustrates an example of the system, and the number of communication devices 20 and the number of terminals 15 may be changed according to the implementation.

The application server 5 and the MQTT server 10 are located on the Internet 3. Further, the Internet 3 is connected to a third generation/long term evolution (3G/LTE) network 7. The terminal 15 (15a to 15c) used by a user can communicate with the application server 5 on the Internet 3 through the 3G/LTE network 7. The system illustrated in FIG. 5 is an example, and the communication device 20 may communicate with the application server 5 through only the Internet 3, without passing through the 3G/LTE network 7. In the example illustrated in FIG. 5, the terminal 15a is a computer, the terminal 15b is a tablet, and the terminal 15c is a cell phone, but the terminal 15 is an arbitrary device that can be used when the user accesses the application server 5. The communication device 20 (20a to 20c) is connected to the MQTT server 10 and provided near each monitoring target.

The embodiments are described below, divided into an example of processing performed when the communication device 20 uploads data and an example of processing performed when the communication device 20 downloads data.

### (1) Example of Processing Performed When the Communication Device 20 Uploads Data

The user of a remote monitoring system registers himself/herself in advance as a user of the remote monitoring system, and provides the communication device 20 near a monitoring target. Further, a communication device ID that uniquely identifies the communication device 20 provided near a monitoring target by a user is assigned to each communication device 20. On the other hand, the application server 5 registers, in the registered information table 66, information on a user who uses the remote monitoring system.

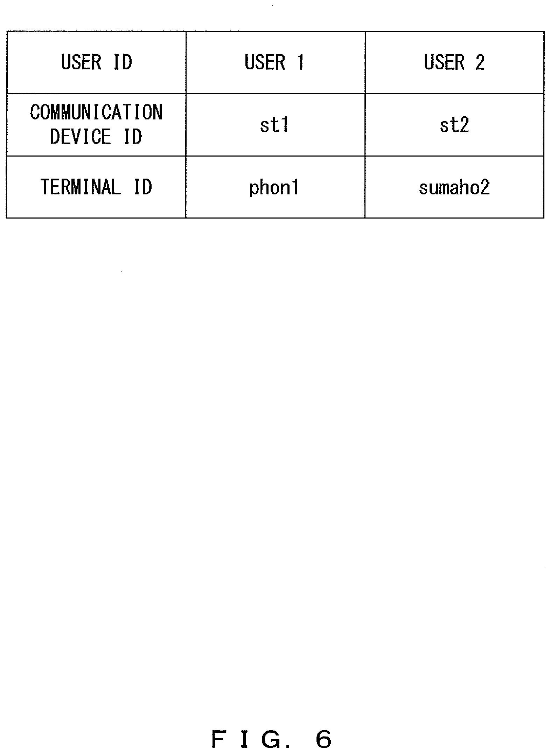

FIG. 6 illustrates an example of the registered information table 66. A communication device ID and a terminal ID are associated with a user ID that identifies each user, and these IDs are registered in the registered information table 66. The communication device ID is information that identifies the communication device 20 provided in order to monitor a monitoring target of a user identified by the user ID. The terminal ID is an identifier that is assigned to the terminal 15 used when a user identified by the user ID accesses the application server 5. An arbitrary piece of information that can identify a terminal of a user uniquely may be used as a terminal ID, so a phone number may be used as a terminal ID when the terminal 15 is a telephone. In the example illustrated in FIG. 6, a user identified by "user ID=user 1" provides the communication device 20 in which "communication device ID=st1" near a monitoring target. When the terminal 15 used by the user 1 communicates with the application server 5, phon1 is reported to the application server 5 as an ID of the terminal. Likewise, the communication device ID of the communication device 20 used by a user identified by "user ID=user 2" is st2, and the terminal ID of the terminal 15 used by the user identified by "user ID=user 2" is sumaho2.

When a user confirms information on a monitoring target using the remote monitoring system, the user transmits a processing request to the application server 5 using the terminal 15 registered in the remote monitoring system in advance. The processing request includes information that is used when processing requested by the user is identified as well as a user ID and a terminal ID. The processing request may be automatically generated by the user depressing a button displayed by an application of the remote monitoring system that is operating in the terminal 15, so as to be transmitted to the application server 5.

The transceiver 61 of the application server 5 receives a processing request. The controller 62 determines whether a combination of a user ID and a terminal ID that are included in the processing request is registered in the registered information table 66. When the combination of the user ID and the terminal ID is included in the registered information table 66, the controller 62 determines that a registered user has made a request that a control be performed, and updates the management information table 67.

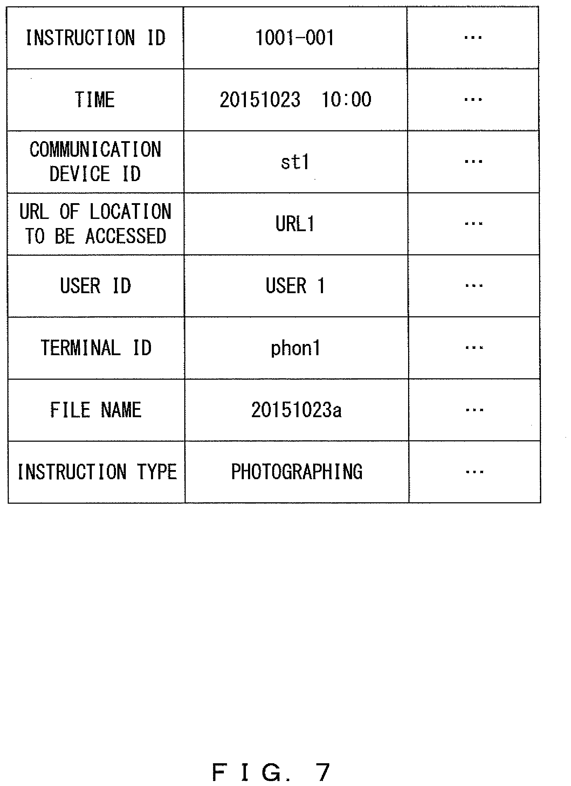

FIG. 7 illustrates an example of the management information table 67. The management information table 67 associates an instruction transmitted from the application server 5 to the communication device 20 with a report destination device to which a result of processing performed by executing the instruction is reported. The controller 62 generates an instruction that causes the communication device 20 to perform processing requested by a registered user, and assigns an instruction ID to the generated instruction. The instruction ID is information that identifies each instruction uniquely. With respect to each instruction to the communication device 20, the management information table 67 illustrated in FIG. 7 associates an instruction ID, a time, a communication device ID, a URL (uniform resource locator) of a location to be accessed, a user ID, a terminal ID, a file name, and an instruction type. The time is a time at which the application server 5 obtains an instruction identified by an instruction ID. The communication device ID is an ID of the communication device 20 requested to execute an instruction, and is assigned to the communication device 20 specified by use of the registered information table 66. The URL of a location to be accessed represents a location to be accessed when an instruction to the communication device 20 causes the communication device 20 to perform communication. The URL of a location to be accessed may be a URL of an upload destination when a request for the communication device 20 to perform uploading is made, or it may be a location in which a file and data to be downloaded by the communication device 20 is stored. The user ID is an ID that identifies a user of the terminal 15 who transmitted a processing request that causes an instruction to be transmitted, and the terminal ID is information that identifies the terminal 15 that transmitted the processing request that causes the instruction to be transmitted. The file name is a name of a file on which the communication device 20 is requested to perform processing. When the communication device 20 is requested to perform uploading, the file name is used as a name of a file that is a processing result obtained in the communication device 20. On the other hand, when the communication device 20 is requested to perform downloading, the name of a file to be downloaded is recorded as a file name in the management information table 67. The instruction type is a type of an instruction.

The management information table 67 illustrated in FIG. 7 is an example, and an information element or information included in the management information table 67 may be changed according to the implementation. For example, when a type of an instruction can also be specified by an instruction ID, such as when a string obtained by combining information indicating a type of an instruction and a serial number of an instruction of the same type is determined to be an instruction ID, there is no need to include the instruction type in the management information table 67.

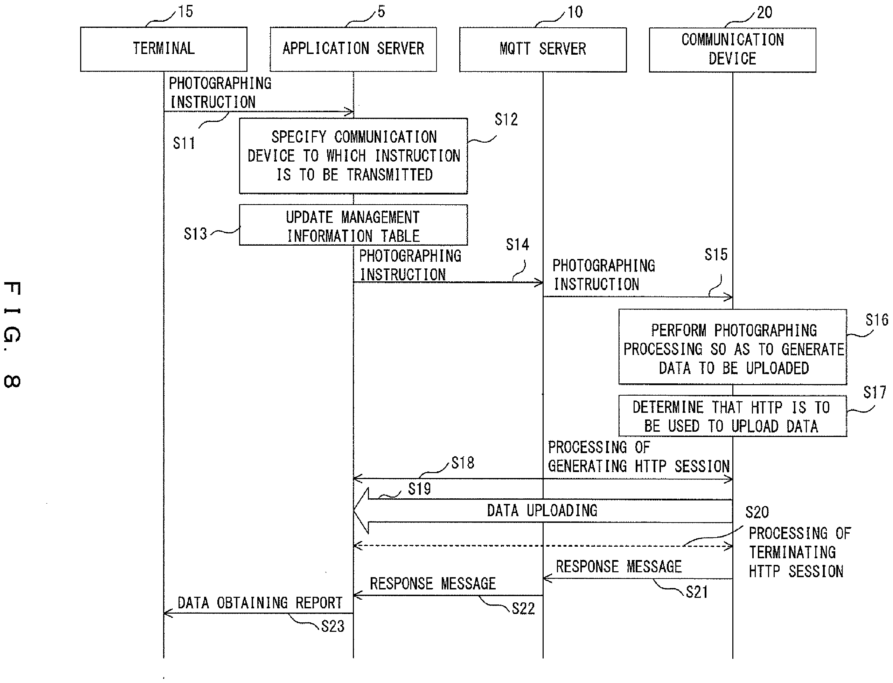

FIG. 8 is a sequence diagram that illustrates an example of processing performed when data is uploaded to the server. An example in which a user identified by "user ID=user 1" makes a request to photograph a monitoring target using the terminal 15 is described below. The processing illustrated in FIG. 8 is an example, and the procedure of the processing may be changed according to the implementation, such as the case in which the order of performing Steps S16 and S17 is changed.

In Step S11, the user transmits a photographing instruction from the terminal 15 to the application server 5. The photographing instruction includes information indicating that a type of requested processing is photographing, a terminal ID of the terminal 15, and a user ID. Here, it is assumed that a photographing instruction including "user ID=user 1" and "terminal ID=phon1" is transmitted. The transceiver 61 of the application server 5 receives the photographing instruction. The controller 62 determines whether a combination of the user ID and the terminal ID included in the photographing instruction is registered in the registered information table 66, and specifies the communication device 20 to which the instruction is to be transmitted (Step S12). The registered information table 66 (FIG. 6) includes a combination of "user ID=user 1" and "terminal ID=phon1", so the controller 62 determines that a request to perform a control is made by a registered user. Further, in the registered information table 66, "communication device ID=st1" is associated with the combination of "user ID=user 1" and "terminal ID=phon1".

Then, the controller 62 generates an instruction ID of an instruction that is to be transmitted to the communication device 20 to which "communication device ID=st1" is assigned, and updates the management information table 67 (Step S13) . In the following description, it is assumed that the controller 62 generates an instruction ID in which "instruction ID=1001-001". Further, it is assumed that it has been determined that an image file obtained by performing photographing is to be stored with a file name "20151023a" in a region specified by a URL "URL1". Then, the controller 62 records, in the management information table 67, entries in the first column in FIG. 7.

Next, using an MQTT protocol, the controller 62 generates a control message that is to be reported to the communication device 20 to which "communication device ID=st1" is assigned. The control message includes information such as a processing instruction, information used when processing is performed, and an instruction ID. Here, it is assumed that the controller 62 generates a control message including the following information.

Device requested to execute an instruction: st1
Instruction ID: 1001-001
URL of a storing location: URL1
File name: 20151023a
Instruction type: photographing
The transceiver 61 transmits the control message to the MQTT server 10 that will transmit a MQTT message to the communication device 20 to which the control message is to be reported.

When the MQTT server 10 receives the photographing instruction, the MQTT server 10 transfers the control message to the communication device 20 according to the MQTT protocol (Step S15) . In the example illustrated in FIG. 8, it is assumed that a session using MQTT is constantly established between the MQTT server 10 and the communication device 20. Further, when the session is established between the MQTT server 10 and the communication device 20, the MQTT server 10 associates a session ID with a communication device ID set for the communication device 20, and stores therein these IDs. Thus, the MQTT server 10 transfers the control message to a session identified by the session ID associated with the communication device ID specified as a device requested to execute an instruction in the control message.

When the receiver 22 of the communication device 20 receives the control message from the MQTT server 10, the receiver 22 outputs the control message to the determination unit 31. The determination unit 31 determines, by analyzing the input control message, that a request to perform photographing has been made, makes a request for the application processing unit 33 to perform photographing processing, and also outputs the information included in the control message to the application processing unit 33. According to the request made by the determination unit 31, the application processing unit 33 performs photographing processing using the camera 50 so as to generate data to be uploaded to the application server 5 (Step S16). Here, the application processing unit 33 gives, to the file to be updated, a file name reported by the control message. As a result, an image file with a file name "20151023a" is generated by the processing performed by the application processing unit 33.

The determination unit 31 determines whether a communication using an HTTP protocol occurs due to the processing requested by the control message. The determination unit 31 may store therein, in advance, a type of processing that involves a communication using an HTTP occurs, or it may determine that the communication using an HTTP protocol occurs when the control message includes information on a URL. In the example illustrated in FIG. 8, it is assumed that the determination unit 31 has determined that an HTTP protocol is to be used to upload data of an image captured according to the photographing instruction (Step S17).

The determination unit 31 makes a request for the connection controller 32 to generate an HTTP session in order to perform a communication using an HTTP protocol. Here, the determination unit 31 reports, to the connection controller 32, information such as a URL of a data upload destination. In response to the request made by the determination unit 31, the connection controller 32 performs processing of establishing an HTTP session between the communication device 20 and the application server 5 (Step S18). The processing of establishing an HTTP session is similar to the processing performed when a usual communication using an HTTP protocol is started.

When an HTTP session is established between the communication device 20 and the application server 5, the transmitter 23 uploads the image data generated in Step S16 to the application server 5 through the HTTP session (Step S19) . The application server 5 stores the data received from the communication device 20 in the region specified by the URL (URL1) reported to the communication device 20 as an upload destination.

When the data uploading has been terminated, the transmitter 23 reports to the connection controller 32 and the application processing unit 33 that transmission is to be terminated. Then, the connection controller 32 terminates the HTTP session between the communication device 20 and the application server 5 (Step S20).

The application processing unit 33 generates a response message for reporting a processing result. Here, the application processing unit 33 generates a response message using an MQTT protocol. In the example illustrated in FIG. 8, it is assumed that the response message reports that uploading has been successfully performed. It is assumed that the response message also includes information indicating that a final destination of the message is the application server 5. The transmitter 23 transmits the generated response message to the MQTT server 10 through a session used for a communication using an MQTT protocol(Step S21). When the MQTT server 10 receives the response message, the MQTT server 10 transfers the response message to the application server 5 according to the MQTT protocol (Step S22). It is assumed that when a session is established between the MQTT server 10 and the application server 5, the MQTT server 10 associates identification information of the application server 5 with a session ID and stores therein the associated information and ID. Thus, the MQTT server 10 transfers the response message to a session identified by the session ID associated with the identification information of the application server 5 specified as a report destination device in the response message.

When the controller 62 of the application server 5 obtains the response message through the transceiver 61, the controller 62 refers to the management information table 67 so as to specify a report destination device of a processing result. The controller 62 generates a message for reporting the processing result to the terminal 15 that transmitted the photographing instruction. Here, using entries in the first column of the management information table 67, the controller 62 generates a data obtaining report reporting to the terminal 15 identified by "terminal ID=phon1" that the data has been successfully obtained. The transceiver 61 transmits the data obtaining report to the terminal 15 (Step S23) . The data obtaining report also includes information reporting that an image-capturing result is stored in URL1.

When the data obtaining report has arrived at the terminal 15, an application that is operating in the terminal 15 performs processing of reporting to a user that the image-capturing result has been obtained. In this processing, a message reporting that a file that is the image-capturing result has been uploaded to URL1 may be displayed on a screen of the terminal 15, or it has been reported by, for example, pops to the user that the data has been obtained. When it has been reported to the user that the data has been obtained, the user performs, using an application, processing of obtaining the image-capturing result as needed.

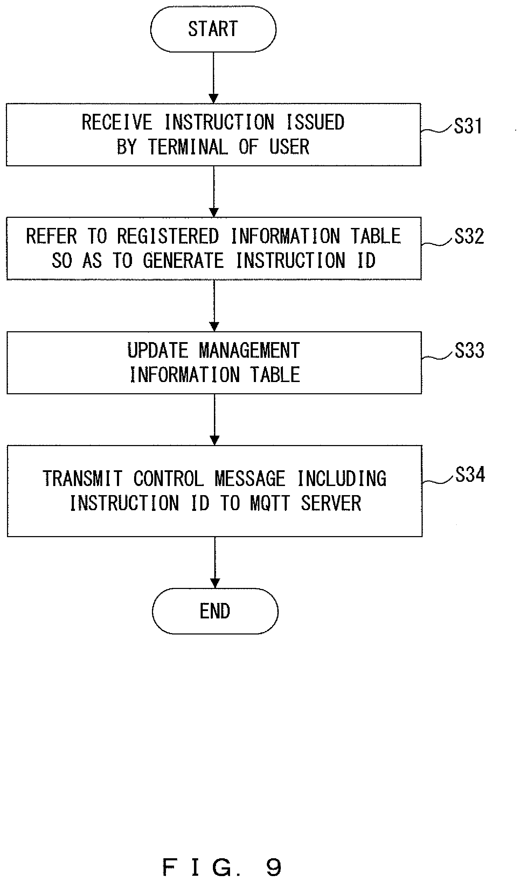

FIG. 9 is a flowchart that illustrates an example of processing performed in the application server 5 when a control message is transmitted. The transceiver 61 receives an instruction issued by a terminal of a user (Step S31). When the controller 62 refers to the registered information table 66 so as to confirm that an instruction from a registered user has been received, the controller 62 generates an instruction ID (Step S32). Further, the controller 62 updates the management information table 67 (Step S33) . The controller 62 generates a control message that includes the instruction ID and that is destined for the communication device 20 to which the instruction is to be transmitted. The transceiver 61 transmits the control message generated in the controller 62 to the MQTT server 10 (Step S34).

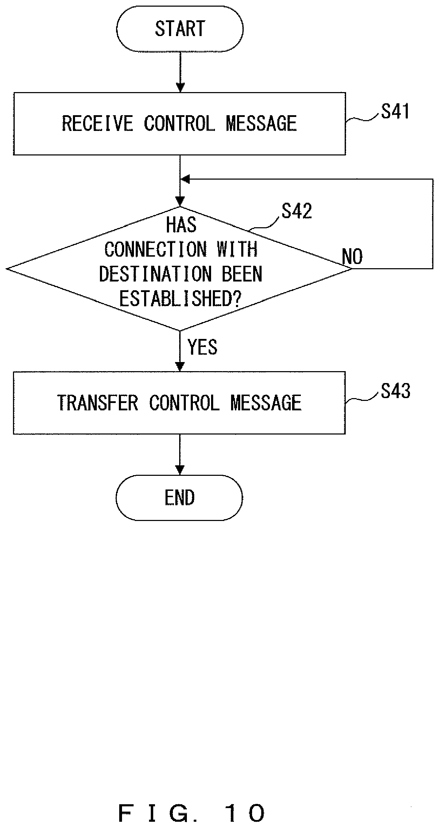

FIG. 10 is a flowchart that illustrates an example of processing performed in the MQTT server 10. The MQTT server 10 receives a control message from the application server 5 (Step S41). The MQTT server 10 determines whether the communication device 20 that is a final destination of the control message is connected to the MQTT server 10 (Step S42) . When the communication device 20 that is a final destination of the control message is not connected to the MQTT server 10, the MQTT server 10 returns to the process of the determination of whether the communication device 20 is connected to the MQTT server 10 (NO in Step S42) . When the communication device 20 that is a final destination of the control message is connected to the MQTT server 10, the MQTT server 10 transfers the control message to the communication device 20 that is a final destination (YES in Step S42, Step S43).

Also when the MQTT server 10 receives a response message from the communication device 20, the processing performed in the MQTT server 10 is similar to the processing performed when a control message is received. In other words, when the application server 5 that is a final destination of a response message and the MQTT server 10 are connected to each other, the MQTT server 10 transmits the received response message to the application server 5. When the application server 5 and the MQTT server 10 are not connected to each other, the MQTT server 10 transmits the response message when the connection between the MQTT server 10 and the application server 5 is established.

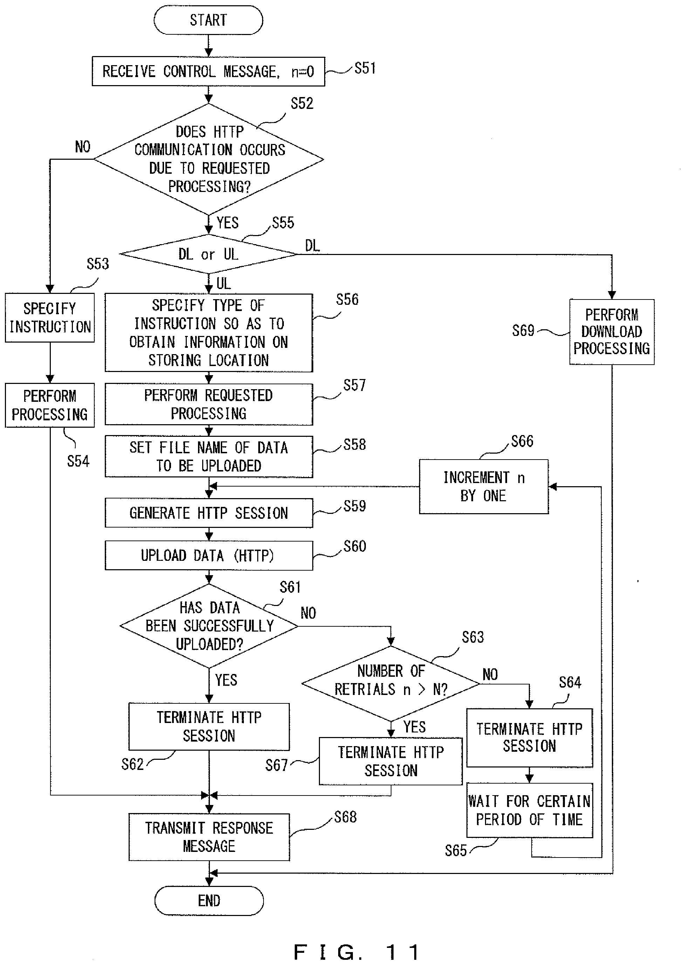

FIG. 11 is a flowchart that illustrates an example of processing performed in the communication device 20. An invariable N and a variable n are used in FIG. 11. The invariable N is an upper limit of the number of retrials performed when a communication using an HTTP session has not been successful. The variable n is the number of retrials performed by the communication device 20.

The receiver 22 of the communication device 20 receives a control message from the MQTT server 10 and sets the number of retrials n to zero (Step S51). The determination unit 31 determines whether an HTTP communication occurs due to the processing requested by the control message (Step S52). When the HTTP communication does not occur due to the processing requested by the control message, the application processing unit 33 specifies an instruction requested to be executed and performs the requested processing (NO in Step S52, Steps S53, S54) . When processing that does not involve an HTTP communication is performed in Step S54, the application processing unit 33 generates a response message for reporting a processing result, using an MQTT protocol. The response message may include data transmitted using the MQTT protocol. For example, when a request to transmit an operation state of the communication device 20 or information on a version of firmware is made, the application processing unit 33 can generate a response message including such information, using an MQTT protocol. The transmitter 23 transmits the generated response message through a session for a communication using an MQTT protocol (Step S68). Thus, the response message will be transmitted to the application server 5 through the MQTT server 10.

On the other hand, when an HTTP communication occurs due to the processing requested by the control message, the determination unit 31 determines whether the HTTP communication that occurs due to the processing is uploading (UL) or downloading (DL) (YES in Step S52, Step S55). When the HTTP communication that occurs due to the processing is uploading, the application processing unit 33 specifies a type of instruction and obtains information on a storing location (select UL in Step S55, Step S56). Here, the information on a storing location is obtained by extracting the information on a storing location from information in a control message. Further, a file name is reported by a control message when a system in which the file name is determined in the application server 5 is used, so the application processing unit 33 extracts the file name from the control message. The application processing unit 33 performs the requested processing (Step S57). Further, the application processing unit 33 sets a file name of data to be uploaded, the data to be uploaded being obtained by performing the requested processing (Step S58). For example, when a file name is obtained from the control message, the application processing unit 33 uses the obtained file name. The connection controller 32 generates an HTTP session (Step S59). The transmitter 23 uploads data through the generated HTTP session (Step S60). The connection controller 32 determines whether the data has been successfully uploaded (Step S61). When the data has been successfully uploaded, the connection controller 32 terminates the HTTP session (YES in Step S61, Step S62). After that, using an MQTT protocol, the application processing unit 33 generates a response message for reporting a processing result. The transmitter 23 transmits the generated response message through a session for a communication using the MQTT protocol (Step S68).

When it has been determined, in Step S61, that the data has not been successfully uploaded, the connection controller 32 determines whether the number of retrials n exceeds the invariable N (NO in Step S61, Step S63). When the number of retrials n does not exceed the invariable N, the connection controller 32 terminates the HTTP session (NO in Step S63, Step S64). The connection controller 32 waits for a certain period of time, increments the number of retrials n by one, returns to the process of Step S59, and establishes an HTTP session again (Steps S65, S66).

On the other hand, when the number of retrials n exceeds the invariable N, the connection controller 32 terminates the HTTP session (YES in Step S63, Step S67). Then, using an MQTT protocol, the application processing unit 33 generates a response message for reporting a processing result. This response message can include information reporting that the data has not been successfully uploaded. The transmitter 23 transmits the generated response message through a session for a communication using the MQTT protocol (Step S68).

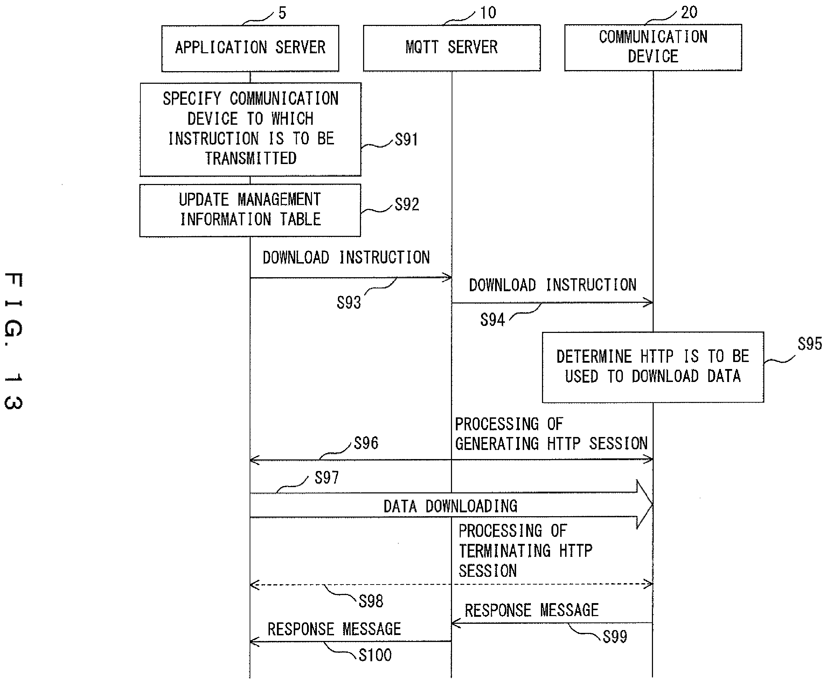

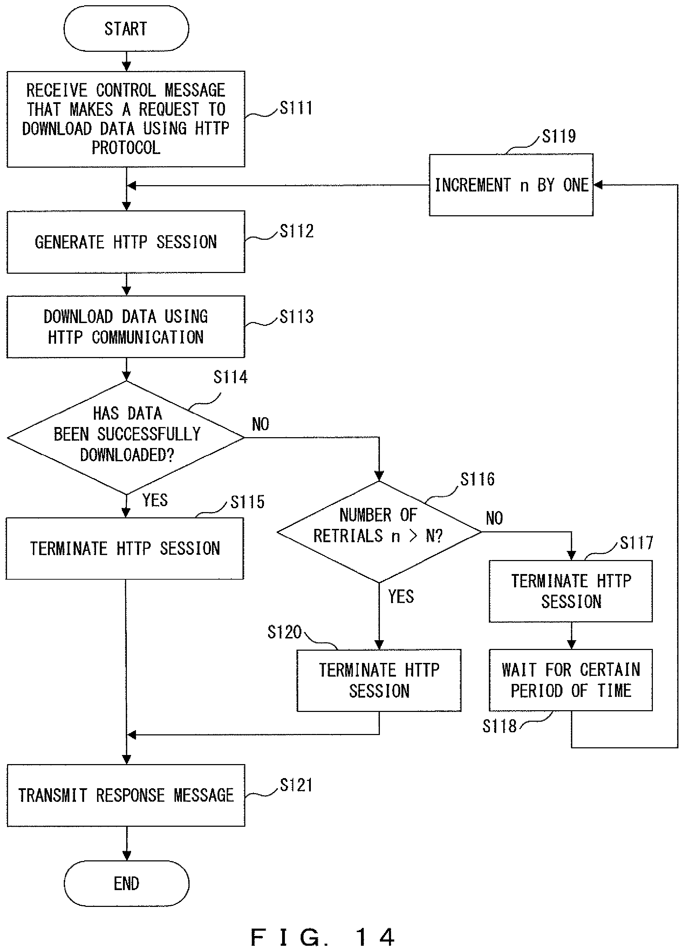

When it has been determined, in Step S55, that the HTTP communication is downloading, download processing is performed (Step S69). The download processing is described in detail with reference to FIGS. 13 and 14.

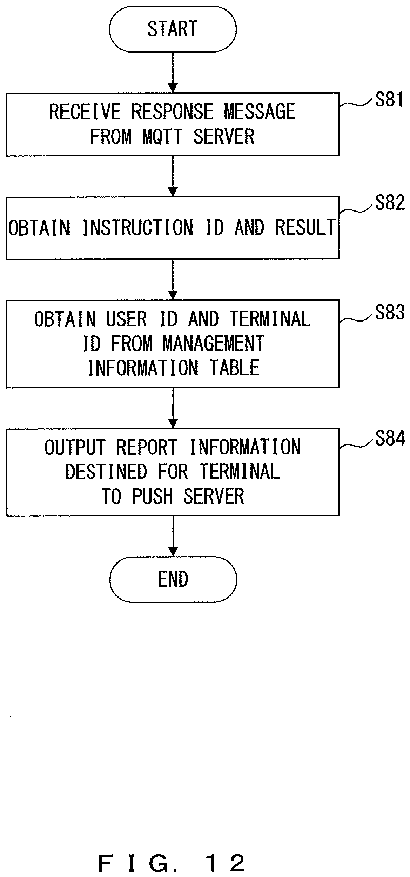

FIG. 12 is a flowchart that illustrates an example of processing in the server when a response message is received. FIG. 12 illustrates an example of processing performed in a system that accesses from the application server 5 to the terminal 15 through a push server, but there is no need to include a push server in a system. When a system does not include a push server, the application server 5 reports report information directly to the terminal 15, as described with reference to, for example, FIG. 8.

The transceiver 61 of the application server 5 receives a response message from the MQTT server 10 (Step S81). The controller 62 obtains an instruction ID and a processing result in the response message (Step S82). The controller 62 refers to the management information table 67 so as to obtain a user ID of a user who made a request to the application server 5 for the processing result reported by the response message, and a terminal ID (Step S83). The controller 62 generates report information that reports the processing result. The transceiver 61 associates the report information destined for the terminal with the terminal ID, and outputs the report information and the terminal ID to the push server (Step S84) .

### (2) Example of Processing Performed When the Communication Device 20 Downloads Data

An example of processing performed when data is downloaded is described below, using an example in which the application server 5 makes a request for the communication device 20 to download data stored in the application server 5. An example in which the application server 5 makes a request for the communication device 20 to download data without an instruction issued by a user is described below, but data may be downloaded according to a request made by a user. A request for the communication device 20 to download data is made when firmware used in the communication device 20 is updated.

FIG. 13 is a sequence diagram that illustrates an example of processing performed when data is downloaded from the server. The controller 62 of the application server 5 specifies the communication device 20 to which a download instruction is to be transmitted (Step S91). For example, it is assumed that the controller 62 has determined to make a request for the communication device 20 to which "communication device ID=st2" is assigned to perform downloading. Then, the controller 62 generates an instruction ID of the instruction to be transmitted, and updates the management information table 67 (Step S92). It is assumed that the controller 62 generates an instruction ID in which "instruction ID=1002-002". Further, it is assumed that a file to be downloaded is stored with a file name "20151023b" in a region specified by a URL "URL2". The controller 62 stores, in the management information table 67, information including the instruction ID and the name of the file requested to be downloaded.

Next, using an MQTT protocol, the controller 62 generates a control message that is to be reported to the communication device 20 to which "communication device ID=st2" is assigned. For example, it is assumed that the controller 62 generates a control message including the following information.

Device requested to execute an instruction: st2
Instruction ID: 1002-002
URL of a storing location: URL2
File name: 20151023b
Instruction type: updating request (download instruction)

The transceiver 61 transmits the control message destined for the communication device 20 to the MQTT server 10 (Step S93) . When the MQTT server 10 receives the control message, the MQTT server 10 transfers the control message to the communication device 20 (Step S94).

When the receiver 22 of the communication device 20 receives the control message from the MQTT server 10, the receiver 22 outputs the control message to the determination unit 31. The determination unit 31 determines, by analyzing the input control message, that a request to update firmware has been made, and determines that an HTTP protocol is to be used to perform downloading (Step S95).

The determination unit 31 reports a result of the determination and the information included in the control message to the connection controller 32 and the application processing unit 33. The connection controller 32 performs processing of establishing an HTTP session between the communication device 20 and the application server 5, using the information such as a URL of a location from which data is to be downloaded (Step S96). The processing of establishing an HTTP session is similar to the processing performed when a usual communication using an HTTP protocol is started.

When an HTTP session is established between the communication device 20 and the application server 5, the application processing unit 33 performs processing of downloading a file having the file name specified by the control message through the HTTP session (Step S97). When the downloading has been terminated, the application processing unit 33 reports the termination of the downloading to the connection controller 32. Then, the connection controller 32 terminates the HTTP session between the communication device 20 and the application server 5 (Step S98).

The application processing unit 33 generates a response message for reporting a processing result. Here, the application processing unit 33 generates a response message destined for the application server 5 using an MQTT protocol. In the example illustrated in FIG. 13, it is assumed that the response message reports that downloading has been successfully performed. The transmitter 23 transmits the generated response message to the MQTT server 10 through a session used for a communication using an MQTT protocol (Step S99). When the MQTT server 10 receives the response message, the MQTT server 10 transfers the response message to the application server 5 according to the MQTT protocol (Step S100).

FIG. 14 is a flowchart that illustrates an example of download processing performed in the communication device. FIG. 14 is a flowchart in which the process performed in Step S69 of FIG. 11 is described in detail. Also in FIG. 14, the variable n is the number of retrials of an HTTP communication, and the invariable N is an upper limit of the number of retrials.

First, it is assumed that it has been determined that the determination unit 31 of the communication device 20 has received a control message that makes a request to download data using an HTTP protocol (Step Sill). The connection controller 32 generates an HTTP session (Step S112). Using the receiver 22, the application processing unit 33 downloads the data specified by the control message through the generated HTTP session (Step S113). The application processing unit 33 determines whether the data has been successfully downloaded (Step S114). When the data has been successfully downloaded, the connection controller 32 terminates the HTTP session (YES in Step S114, Step S115). After that, using an MQTT protocol, the application processing unit 33 generates a response message for reporting a processing result. The transmitter 23 transmits the generated response message through a session for a communication using the MQTT protocol (Step S121).

The processes of Steps S116 to S120 performed when it has been determined, in Step S114, that the data has not been successfully downloaded are similar to the processes of Steps S63 to S67 of FIG. 11. After the process of Step S120, a response message for reporting a processing result is transmitted to the application server 5 using an MQTT protocol (Step S121).

As described above, when the communication device 20 transmits/receives data by performing processing in response to a request issued by the application server 5, control information such as a request to perform processing and a processing result is transmitted using a first protocol (MQTT) . On the other hand, data is transmitted using a second protocol (HTTP) suitable for data communication, but a session for a communication using the second protocol is not constantly established and is formed only when the session is used to transmit data. This results in avoiding maintaining a needless communication path and in improving the efficiency in a system. The first protocol has a short header length and is used to transmit a small amount of data such as control information. Thus, even if a communication path is maintained for maintaining the communication session using the first protocol, a communication system becomes more efficient, compared to the case in which the session using the second protocol is constantly established.

The first protocol is used to transmit/receive a packet having a short header length and a short data length, so a load imposed on, for example, the application server 5 by maintaining a communication session using the first protocol is lower than the load imposed by maintaining a communication session using the second protocol. Thus, in the system according to the embodiments, even if a plurality of communication devices 20 are connected to one application server 5, a load imposed on the application server 5 will be low. Further, a processing result is reported by the communication device 20 using the first protocol. Thus, with respect to processing of uploading and downloading data, the application server 5 does not have to confirm a progress status and a completion timing. Therefore, in the system according to the embodiments, a load imposed on the application server 5 is reduced.

Further, when the first protocol is a publish/subscribe protocol, a communication error will not occur even if a communication is not successfully established between the application server 5 and the communication device 20, because a message destined for the communication device 20 is held in the MQTT server 10. Thus, it is also possible to prevent a communication error from occurring frequently due to, for example, the communication device 20 being temporarily disconnected from a network.

When a communication path is formed between the application server 5 and the communication device 20 through the MQTT server 10 using the first protocol, a control message destined for the communication device 20 arrives at the communication device 20, so it is possible to perform image-capturing processing in real time. In other words, in the system according to the embodiments, it is possible to obtain data in real time while improving the efficiency in the system by restricting a period of time in which a session using the second protocol remains established.

As described above, according to the communication device, the communication system, the communication method, and the communication program according to the embodiments, the efficacy in communication is improved.

### <Others>

The embodiments of the present invention are not limited to the examples described above, and various modifications may be made thereto. Some examples are described below.

When a request to download, for example, a file stored in the application server 5 is made due to a request made by the terminal 15, processing performed in the application server 5 when a control message is transmitted is also similar to the processing described with reference to FIG. 9. Further, processing performed in the application server 5 when a response message is reported to the application server 5 is also similar to the processing described with reference to FIG. 12.

For example, the example in which the MQTT server 10 uses a communication device ID and information indicating the application server 5 that are included in a control message when the MQTT server 10 determines a transfer destination has been described above, but other methods may be used to transfer the control message from the MQTT server 10. In other words, the control message may include any information that can be used by the MQTT server 10 to determine a final destination of the control message, wherein the MQTT server 10 determines the transfer destination as needed, using the information included in the control message.

The tables described above are examples, and various modifications may be made thereto according to the implementation. For example, the information elements included in each table may be modified according to the implementation.

Further, the example in which image data is uploaded from the communication device 20 to the application server 5 has been described above, but the data to be uploaded is not limited to image data, and any data such as a video and a sound may be uploaded. Likewise, data downloaded by the communication device 20 is not limited to updating information about firmware, and any data may be downloaded.

### Reference Numerals

- 3: Internet
- 5: application server
- 7: 3G-LTE network
- 10: MQTT server
- 15: terminal
- 20: communication device
- 21, 61: transceiver
- 22: receiver
- 23: transmitter
- 30, 62: controller
- 31: determination unit
- 32: connection controller
- 33: application processing unit
- 40, 65: storage
- 50: camera
- 66: registered information table
- 67: management information table
- 101: processor
- 102: memory
- 103: input device
- 104: output device
- 105: bus
- 106: storage device
- 107: image-capturing device
- 109: network interface

## Claims

1. A communication device (20) comprising:
a receiver (22) configured to receive a control message from a first server (10, 10a), the first server (10, 10a) being connectable to the communication device (20) through a first session using a first protocol, which has been used by a second server(5, 5a) to send the control message to the first server (10, 10a) ;
a controller (30) configured to perform processing specified by the control message and to establish a second session for a communication using a second protocol when communication processing is performed between the communication device (20) and the second server (5, 5a) using the second protocol, the second session being established between the communication device (20) and the second server (5, 5a), the communication processing occurring due to the processing specified by the control message, a header length of the second protocol being longer than a header length of the first protocol; and
a transceiver (21) configured to perform communication using the first session and the second session, wherein
the controller (30) is configured to terminate the second session when the communication between the communication device (20) and the second server (5, 5a) using the second protocol is terminated, and
the transceiver (21) is configured to transmit a report to the first server (10, 10a) through the first session, the report including a result of the processing specified by the control message and information indicating that a final destination of the report is the second server (5, 5a).

2. The communication device (20) according to claim 1, wherein
the controller is configured to
determine to use the second protocol to upload data in a certain case and
obtain information on an upload destination of the data from the control message in the certain case, the certain case being a case in which a request to upload the data to the second server (5, 5a) is made by the control message, and
the transceiver is configured to
transmit the data to the upload destination through the second session and
transmit, to the first server (10, 10a) and through the first session, information reporting to the second server (5, 5a) whether the data has been successfully uploaded.

3. The communication device (20) according to claim 2, further comprising an image-capturing device (50) configured to capture an image of a monitoring target, wherein
the controller is configured to
obtain data of a captured-image obtained by capturing an image of the monitoring target from the image-capturing device (50) in another certain case, and
determine to use the second protocol to transmit the captured-image data to the second server (5, 5a) in the other certain case, the other certain case being a case in which a request to upload the data of the captured-image obtained by capturing the image of the monitoring target is made by the control message, and
the transceiver is configured to
transmit the captured-image data to the upload destination through the second session and
transmit, to the first server (10, 10a), information reporting to the second server (5, 5a) whether the captured-image data has been successfully uploaded.

4. The communication device (20) according to any one of claims 1 to 3, wherein
the controller is configured to determine to use the second protocol to download data when a request to download the data from the second server (5, 5a) is made by the control message, and
the transceiver is configured to
receive, from the second server (5, 5a), the data to be downloaded through the second session, and
transmit, to the first server (10, 10a) and through the first session, information reporting to the second server (5, 5a) whether the data has been successfully downloaded.

5. A communication system comprising:
a communication device (20) configured to receive a control message from a first server (10, 10a) that is connectable to the communication device (20) through a first session using a first protocol; and
a second server (5, 5a) configured to transmit the control message to the first server (10, 10a) using the first protocol, wherein
the communication device (20) is configured to
perform processing specified by the control message,
establish a second session between the communication device (20) and the second server (5, 5a) when the communication device (20) performs communication with the second server (5, 5a) using a second protocol, a header length of the second protocol being longer than a header length of the first protocol, the communication using the second protocol occurring due to the processing specified by the control message,
terminate the second session when the communication between the communication device (20) and the second server (5, 5a) using the second protocol is terminated, and
transmit a report to the first server (10, 10a) through the first session, the report including a result of the processing specified by the control message and information indicating that a final destination of the report is the second server (5, 5a).

6. The communication system according to claim 5, further comprising a terminal (15) configured to access the second server (5), wherein
the second server (5) is configured to
generate a control message that makes a request to upload data to the second server (5) when a request to obtain the data from the communication device (20) is made by the terminal (15), and
transmit the control message to the first server (10) using the first protocol,
the communication device (20) is configured to
determine to use the second protocol to upload the data
transmit the data to the second server (5) through the second session, and
transmit, to the first server (10) and through the first session, report information reporting to the second server (5) whether the data has been successfully uploaded, and
the second server (5) is configured to report a result of obtaining the data to the terminal when the second server (5) obtains the report information through the first server (10).

7. The communication system according to claim 5 or 6, wherein
the second server (5, 5a) is configured to
generate another control message that makes a request for the communication device (20) to download data from the second server (5, 5a), and
transmit the other control message to the first server (10, 10a) using the first protocol,
the communication device (20) is configured to
receive the data to be downloaded through the second session and
transmit, to the first server (10, 10a) and through the first session, information reporting to the second server (5, 5a) whether the data has been successfully downloaded, and
the second server (5, 5a) is configured to obtain, through the first server (10, 10a), the information reporting whether the data has been successfully downloaded.

8. A communication method comprising:
receiving, by a communication device, a control message from a first server, the first server having received the control message from a second server using a first protocol, the first server being connected to the communication device through a first session using the first protocol;
performing, by the communication device, processing specified by the control message;
establishing, by the communication device, a second session for a communication using a second protocol when communication processing is performed between the communication device and the second server using the second protocol, the second session being established between the communication device and the second server, the communication processing occurring due to the processing specified by the control message, a header length of the second protocol being longer than a header length of the first protocol;
performing, by the communication device, communication using the second protocol through the second session;
terminating, by the communication device, the second session when the communication between the communication device and the second server using the second protocol is terminated; and
transmitting, by the communication device, a report to the first server through the first session, the report including a result of the processing specified by the control message and information indicating that a final destination of the report is the second server.

9. The communication method according to claim 8, wherein
when a request to upload data to the second server is made by the control message, the communication device
determines to use the second protocol to upload the data,
obtains information on an upload destination of the data from the control message,
transmits the data to the upload destination through the second session, and
transmits, to the first server, and through the first session, information reporting to the second server whether the data has been successfully uploaded.

10. The communication method according to claim 9, wherein
the communication device
includes an image-capturing device configured to capture an image of a monitoring target,
generates data of a captured-image obtained by capturing an image of the monitoring target when a request to upload the captured-image data is made by the control message,
determines to use the second protocol when the captured-image data is transmitted to the second server,
transmits the captured-image data to the upload destination through the second session, and
transmits, to the first server, information reporting to the second server whether the captured-image data has been successfully uploaded.

11. The communication method according to any one of claims 8 to 10, wherein
when a request to download data from the second server is made by the control message, the communication device
determines to use the second protocol to download the data,
receives, from the second server, the data to be downloaded through the second session, and
transmits, to the first server and through the first session, information reporting to the second server whether the data has been successfully downloaded.

12. A communication computer program comprising instructions which, when the program is executed by a communication device, cause the communication device to:
receive a control message from a first server, the first server being connected to the communication device through a first session using a first protocol, which has been used by a second server to send the control message to the first server;
perform processing specified by the control message;
establish a second session for a communication using a second protocol when communication processing is performed between the communication device and the second server using the second protocol, the second session being established between the communication device and the second server, the communication processing occurring due to the processing specified by the control message, a header length of the second protocol being longer than a header length of the first protocol;
perform communication using the second protocol through the second session;
terminate the second session when the communication between the communication device and the second server using the second protocol is terminated; and
transmit a report to the first server through the first session, the report including a result of the processing specified by the control message and information indicating that a final destination of the report is the second server.

13. The communication program according to claim 12, wherein
when a request to upload data to the second server is made by the control message, the communication program causes the communication device to:
determine to use the second protocol to upload the data;
obtain information on an upload destination of the data from the control message;
transmit the data to the upload destination through the second session; and
transmit, to the first server and through the first session, information reporting to the second server whether the data has been successfully uploaded.

14. The communication program according to claim 12 or 13, wherein
when a request to download data from the second server is made by the control message, the communication program causes the communication device to:
determine to use the second protocol to download the data;
receive, from the second server, the data to be downloaded through the second session; and
transmit, to the first server and through the first session, information reporting to the second server whether the data has been successfully downloaded.

## Patentansprüche

1. Kommunikationsvorrichtung (20), umfassend:
einen Empfänger (22), der konfiguriert ist, eine Steuernachricht von einem ersten Server (10, 10a) zu empfangen, wobei der erste Server (10, 10a) mit der Kommunikationsvorrichtung (20) verbindbar ist über eine erste Sitzung unter Verwendung eines ersten Protokolls, das von einem zweiten Server (5, 5a) verwendet wurde, um die Steuernachricht an den ersten Server (10, 10a) zu senden,
eine Steuerung (30), die konfiguriert ist, eine durch die Steuerungsnachricht spezifizierte Verarbeitung durchzuführen und eine zweite Sitzung für eine Kommunikation unter Verwendung eines zweiten Protokolls aufzubauen, wenn eine Kommunikationsverarbeitung zwischen der Kommunikationsvorrichtung (20) und dem zweiten Server (5, 5a) unter Verwendung des zweiten Protokolls durchgeführt wird, wobei die zweite Sitzung zwischen der Kommunikationsvorrichtung (20) und dem zweiten Server (5, 5a) aufgebaut wird, wobei die Kommunikationsverarbeitung aufgrund der durch die Steuernachricht spezifizierten Verarbeitung stattfindet, wobei eine Header-Länge des zweiten Protokolls länger als eine Header-Länge des ersten Protokolls ist; und
einen Sendeempfänger (21), der konfiguriert ist, eine Kommunikation unter Verwendung der ersten Sitzung und der zweiten Sitzung durchzuführen, wobei
die Steuerung (30) konfiguriert ist, die zweite Sitzung zu beenden, wenn die Kommunikation zwischen der Kommunikationsvorrichtung (20) und dem zweiten Server (5, 5a) unter Verwendung des zweiten Protokolls beendet ist, und
der Sendeempfänger (21) konfiguriert ist, über die erste Sitzung einen Bericht an den ersten Server (10, 10a) zu senden, wobei der Bericht ein Ergebnis der durch die Steuernachricht spezifizierten Verarbeitung und Informationen, die angeben, dass ein finales Ziel des Berichts der zweite Server (5, 5a) ist, aufweist.

2. Kommunikationsvorrichtung (20) nach Anspruch 1, wobei
die Steuerung konfiguriert ist zum
Bestimmen, das zweite Protokoll zu verwenden, um in einem bestimmten Fall Daten hochzuladen und
Erhalten von Informationen über ein Hochladeziel der Daten aus der Steuernachricht in dem bestimmten Fall, wobei der bestimmte Fall ein Fall ist, in dem eine Anforderung zum Hochladen der Daten auf den zweiten Server (5, 5a) durch die Steuernachricht erfolgt, und Sendeempfänger konfiguriert ist zum
Senden der Daten über die zweite Sitzung an das Hochlade-Ziel, und
Senden, an den ersten Server (10, 10a) und über die erste Sitzung, von Informationen, die dem zweiten Server (5, 5a) berichten, ob die Daten erfolgreich hochgeladen wurden.

3. Kommunikationsvorrichtung (20) nach Anspruch 2, ferner umfassend eine Bilderfassungsvorrichtung (50), die konfiguriert ist, ein Bild eines Überwachungsziels zu erfassen, wobei
die Steuerung konfiguriert zum
Erhalten von Daten eines erfassten Bildes, die durch Erfassen eines Bildes des Überwachungsziels von der Bilderfassungsvorrichtung (50) in einem anderen bestimmten Fall erhalten werden, und
Bestimmen, das zweite Protokoll zu verwenden, um die erfassten Bilddaten an den zweiten Server (5, 5a) zu senden, in dem anderen bestimmten Fall, wobei der andere bestimmte Fall ein Fall ist, in dem eine Anforderung zum Hochladen der Daten des erfassten Bildes, das durch Erfassen des Bildes des Überwachungsziels erhalten wird, durch die Steuermeldung erfolgt, und der Sendeempfänger konfiguriert ist zum
Senden des erfassten Bilddaten über die zweite Sitzung an das Hochlade-Ziel, und
Senden, an den ersten Server (10, 10a), von Informationen, die dem zweiten Server (5, 5a) berichten, ob die erfassten Bilddaten erfolgreich hochgeladen wurden.

4. Kommunikationsvorrichtung (20) nach einem der Ansprüche 1 bis 3, wobei
die Steuerung ist konfiguriert, zu bestimmen, das zweite Protokoll zum Herunterladen von Daten zu verwenden, wenn eine Anforderung zum Herunterladen der Daten von dem zweiten Server (5, 5a) durch die Steuernachricht erfolgt, und
der Sendeempfänger konfiguriert ist zum
Empfangen, von dem zweiten Server (5, 5a), der über die zweite Sitzung herunterzuladenden Daten, und
Senden, an den ersten Server (10, 10a) und über die erste Sitzung, von Informationen, die dem zweiten Server (5, 5a) berichten, ob die Daten erfolgreich heruntergeladen wurden.

5. Kommunikationssystem, umfassend:
eine Kommunikationsvorrichtung (20), die konfiguriert ist, eine Steuernachricht von einem ersten Server (10, 10a) zu empfangen, der über eine erste Sitzung mit der Kommunikationsvorrichtung (20) verbindbar ist, unter Verwendung eines ersten Protokolls; und
einen zweiten Server (5, 5a), der konfiguriert ist, die Steuernachricht unter Verwendung des ersten Protokolls an den ersten Server (10, 10a) zu senden, wobei
die Kommunikationsvorrichtung (20) konfiguriert ist zum
Durchführen einer durch die Steuernachricht spezifizierten Verarbeitung,
Aufbauen einer zweiten Sitzung zwischen der Kommunikationsvorrichtung (20) und dem zweiten Server (5, 5a), wenn die Kommunikationsvorrichtung (20) eine Kommunikation mit dem zweiten Server (5, 5a) unter Verwendung eines zweiten Protokolls durchführt, wobei eine Header-Länge des zweiten Protokolls länger als eine Header-Länge des ersten Protokolls ist, wobei die Kommunikation unter Verwendung des zweiten Protokolls aufgrund der durch die Steuernachricht spezifizierten Verarbeitung stattfindet,
Beenden der zweiten Sitzung, wenn die Kommunikation zwischen dem Kommunikationsvorrichtung (20) und dem zweiten Server (5, 5a) unter Verwendung des zweiten Protokolls beendet ist, und
Senden eines Berichts an den ersten Server (10, 10a), über die erste Sitzung, wobei der Bericht ein Ergebnis der durch die Steuernachricht spezifizierten Verarbeitung und Informationen, die angeben, dass das finale Ziel des Berichts der zweite Server (5, 5a) ist, aufweist.

6. Kommunikationssystem nach Anspruch 5, ferner umfassend ein Endgerät (15), das konfiguriert ist, auf den zweiten Server (5) zuzugreifen, wobei
der zweite Server (5) konfiguriert ist zum
Erzeugen einer Steuernachricht, die eine Anforderung zum Hochladen von Daten an den zweiten Server (5) stellt, wenn eine Anforderung zum Erhalten der Daten von der Kommunikationsvorrichtung (20) durch das Endgerät (15) erfolgt, und
Senden der Steuernachricht an den ersten Server 10) unter Verwendung des ersten Protokolls,
die Kommunikationsvorrichtung (20) konfiguriert ist zum
Bestimmen, das zweite Protokoll zu verwenden, um die Daten hochzuladen,
Senden der Daten über die zweite Sitzung an den zweiten Server (5), und
Senden, an den ersten Server (10) und über die erste Sitzung, von Informationen, die dem zweiten Server (5) berichten, ob die Daten erfolgreich hochgeladen wurden, und
der zweite Server (5) konfiguriert ist, ein Ergebnis des Erhaltens der Daten an das Endgerät zu berichten, wenn der zweite Server (5) über den ersten Server (10) die Berichtsinformationen erhält.

7. Kommunikationssystem nach Anspruch 5 oder 6, wobei
der zweite Server (5, 5a) konfiguriert ist zum
Erzeugen einer anderen Steuernachricht, die eine Anforderung an die Kommunikationsvorrichtung (20) zum Herunterladen von Daten von dem zweiten Server (5, 5a) stellt, und
Senden der anderen Steuernachricht an den ersten Server (10, 10a) unter Verwendung des ersten Protokolls,
die Kommunikationsvorrichtung (20) konfiguriert ist zum
Empfangen der Daten, die über die zweite Sitzung herunterzuladen sind, und
Senden, an den ersten Server (10, 10a) und über die erste Sitzung, von Informationen, die dem zweiten Server (5, 5a) berichten, ob die Daten erfolgreich heruntergeladen wurden, und wobei der zweite Server (5, 5a) konfiguriert ist, über den ersten Server (10, 10a), die Informationen zu erhalten, die berichten, ob die Daten erfolgreich heruntergeladen wurden.

8. Kommunikationsverfahren, umfassend:
Empfangen, durch eine Kommunikationsvorrichtung, einer Steuernachricht von einem ersten Server, wobei der erste Server die Steuernachricht von einem zweiten Server unter Verwendung eines ersten Protokolls empfangen hat, wobei der erste Server über eine erste Sitzung unter Verwendung des ersten Protokolls mit der Kommunikationsvorrichtung verbunden ist;
Durchführen, durch die Kommunikationsvorrichtung, einer durch die Steuernachricht spezifizierten Verarbeitung;
Aufbauen, durch die Kommunikationsvorrichtung, einer zweiten Sitzung für eine Kommunikation unter Verwendung eines zweiten Protokolls, wenn eine Kommunikationsverarbeitung zwischen der Kommunikationsvorrichtung und dem zweiten Server unter Verwendung des zweiten Protokolls durchgeführt wird, wobei die zweite Sitzung zwischen der Kommunikationsvorrichtung und dem zweiten Server aufgebaut wird, wobei die Kommunikationsverarbeitung aufgrund der durch die Steuernachricht spezifizierten Verarbeitung stattfindet, wobei eine Header-Länge des zweiten Protokolls länger als eine Header-Länge des ersten Protokolls ist;
Durchführen, durch die Kommunikationsvorrichtung, einer Kommunikation unter Verwendung des zweiten Protokolls über die zweite Sitzung;
Beenden, durch die Kommunikationsvorrichtung, der zweiten Sitzung, wenn die Kommunikation zwischen der Kommunikationsvorrichtung und dem zweiten Server unter Verwendung des zweiten Protokolls beendet wird; und
Senden, durch die Kommunikationsvorrichtung, über die erste Sitzung, eines Berichts an den ersten Server, wobei der Bericht ein Ergebnis der durch die Steuernachricht spezifizierten Verarbeitung und Informationen, die angeben, dass ein finales Ziel des Berichts der zweite Server ist, aufweist.

9. Kommunikationsverfahren nach Anspruch 8, wobei,
wenn eine Anforderung zum Hochladen von Daten auf den zweiten Server durch die Steuernachricht erfolgt, die Kommunikationsvorrichtung
bestimmt, das zweite Protokoll zu verwenden, um die Daten hochzuladen,
Informationen über ein Hochlade-Ziel der Daten aus der Steuernachricht erhält,
die Daten über die zweiten Sitzung an das Hochlade-Ziel sendet, und
an den ersten Server und über die erste Sitzung Informationen sendet, die dem zweiten Server berichten, ob die Daten erfolgreich hochgeladen wurden.

10. Kommunikationsverfahren nach Anspruch 9, wobei
die Kommunikationsvorrichtung
ein Bilderfassungsgerät aufweist, das konfiguriert ist, ein Bild eines Überwachungsziels zu erfassen,
Daten eines erfassten Bildes erzeugt, die durch Erfassen eines Bildes des Überwachungsziels erhalten werden, wenn eine Anforderung zum Hochladen der erfassten Bilddaten durch die Steuernachricht erfolgt,
bestimmt, das zweite Protokoll zu verwenden, wenn die erfassten Bilddaten an den zweiten Server gesendet werden,
die erfassten Bilddaten über die zweite Sitzung an das Hochlade-Ziel sendet, und
an den ersten Server Informationen sendet, die dem zweiten Server berichten, ob die erfassten Bilddaten erfolgreich hochgeladen wurden.

11. Kommunikationsverfahren nach einem der Ansprüche 8 bis 10, wobei
wenn eine Anforderung zum Herunterladen von Daten von dem zweiten Server durch die Steuernachricht erfolgt, die Kommunikationsvorrichtung
bestimmt, das zweite Protokoll zu verwenden, um die Daten herunterzuladen,
von dem zweiten Server die Daten empfängt, die über die zweite Sitzung herunterzuladen sind, und
an den ersten Server und über die ersten Sitzung Informationen sendet, die dem zweiten Server berichten, ob die Daten erfolgreich heruntergeladen wurden.

12. Kommunikationscomputerprogramm, das Anweisungen umfasst, die, wenn das Programm durch eine Kommunikationsvorrichtung ausgeführt wird, die Kommunikationsvorrichtung veranlassen zum:
Empfangen einer Steuernachricht von einem ersten Server, wobei der erste Server über eine erste Sitzung mit dem Kommunikationsvorrichtung verbunden ist, unter Verwendung eines ersten Protokolls, das von einem zweiten Server verwendet wurde, um die Steuernachricht an den ersten Server zu senden;
Durchführen einer durch die Steuernachricht spezifizierten Verarbeitung;
Aufbauen einer zweiten Sitzung für eine Kommunikation unter Verwendung eines zweiten Protokolls, wenn eine Kommunikationsverarbeitung zwischen der Kommunikationsvorrichtung und dem zweiten Server unter Verwendung des zweiten Protokolls durchgeführt wird, wobei die zweite Sitzung zwischen der Kommunikationsvorrichtung und dem zweiten Server aufgebaut wird, wobei die Kommunikationsverarbeitung aufgrund der durch die Steuernachricht spezifizierten Verarbeitung stattfindet, wobei eine Header-Länge des zweiten Protokolls länger als eine Header-Länge des ersten Protokolls ist;
Durchführen einer Kommunikation unter Verwendung des zweiten Protokolls über die zweite Sitzung;
Beenden der zweiten Sitzung, wenn die Kommunikation zwischen der Kommunikationsvorrichtung und dem zweiten Server unter Verwendung des zweiten Protokolls beendet ist; und
Senden eines Berichts an den ersten Server, über die erste Sitzung, wobei der Bericht ein Ergebnis der in der Steuernachricht angegebenen Verarbeitung und Informationen, die angeben, dass das finale Ziel des Berichts der zweite Server ist, aufweist.

13. Kommunikationsprogramm nach Anspruch 12, wobei
wenn eine Anforderung zum Hochladen von Daten auf den zweiten Server durch die Steuernachricht erfolgt, das Kommunikationsprogramm die Kommunikationsvorrichtung veranlasst zum:
Bestimmen, das zweite Protokoll zu verwenden, um die Daten hochzuladen;
Erhalten von Informationen über ein Hochlade-Ziel der Daten aus der Steuernachricht;
Senden der Daten an das Hochlade-Ziel über die zweite Sitzung; und
Senden, an den ersten Server und über die erste Sitzung, von Informationen, die dem zweiten Server berichten, ob die Daten erfolgreich hochgeladen wurden.

14. Kommunikationsprogramm nach Anspruch 12 oder 13, wobei
wenn eine Anforderung zum Herunterladen von Daten von dem zweiten Server durch die Steuernachricht erfolgt, das Kommunikationsprogramm die Kommunikationsvorrichtung veranlasst zum:
Bestimmen, das zweite Protokoll zu verwenden, um die Daten herunterzuladen;
Empfangen, von dem zweiten Server, der Daten, die über die zweite Sitzung herunterzuladen sind; und
Senden, an den ersten Server und über die erste Sitzung, von Informationen, die dem zweiten Server berichten, ob die Daten erfolgreich heruntergeladen wurden.

## Revendications

1. Dispositif de communication (20) comprenant :
un récepteur (22) configuré pour recevoir un message de commande d'un premier serveur (10, 10a), le premier serveur (10, 10a) pouvant être connecté au dispositif de communication (20) par l'intermédiaire d'une première session en utilisant un premier protocole, qui a été utilisé par un deuxième serveur (5, 5a) pour envoyer le message de commande au premier serveur (10, 10a) ;
un contrôleur (30) configuré pour effectuer un traitement spécifié par le message de commande et pour établir une deuxième session pour une communication en utilisant un deuxième protocole lorsqu'un traitement de communication est effectué entre le dispositif de communication (20) et le deuxième serveur (5, 5a) en utilisant le deuxième protocole, la deuxième session étant établie entre le dispositif de communication (20) et le deuxième serveur (5, 5a), le traitement de communication ayant lieu du fait du traitement spécifié par le message de commande, une longueur d'en-tête du deuxième protocole étant plus grande qu'une longueur d'entête du premier protocole ; et
un émetteur-récepteur (21) configuré pour effectuer une communication en utilisant la première session et la deuxième session, dans lequel
le contrôleur (30) est configuré pour terminer la deuxième session lorsque la communication entre le dispositif de communication (20) et le deuxième serveur (5, 5a) en utilisant le deuxième protocole est terminée, et
l'émetteur-récepteur (21) est configuré pour transmettre un rapport au premier serveur (10, 10a) par l'intermédiaire de la première session, le rapport comprenant un résultat du traitement spécifié par le message de commande et des informations indiquant qu'une destination finale du rapport est le deuxième serveur (5, 5a).

2. Dispositif de communication (20) selon la revendication 1, dans lequel
le contrôleur est configuré pour
déterminer d'utiliser le deuxième protocole pour télécharger en amont des données dans un certain cas, et
obtenir des informations concernant une destination de téléchargement en amont des données à partir du message de commande dans ledit certain cas, ledit certain cas étant un cas dans lequel une demande pour télécharger en amont les données vers le deuxième serveur (5, 5a) est effectuée par le message de commande, et
l'émetteur-récepteur est configuré pour
transmettre les données à la destination de téléchargement en amont par l'intermédiaire de la deuxième session, et
transmettre, au premier serveur (10, 10a) et par l'intermédiaire de la première session, des informations indiquant au deuxième serveur (5, 5a) si les données ont été téléchargées en amont avec succès.

3. Dispositif de communication (20) selon la revendication 2, comprenant en outre un dispositif de capture d'image (50) configuré pour capturer une image d'une cible de surveillance, dans lequel
le contrôleur est configuré pour
obtenir des données d'une image capturée obtenues en capturant une image de la cible de surveillance du dispositif de capture d'image (50) dans un autre certain cas, et
déterminer d'utiliser le deuxième protocole pour transmettre les données d'image capturée au deuxième serveur (5, 5a) dans ledit autre certain cas, ledit autre certain cas étant un cas dans lequel une demande pour télécharger en amont les données de l'image capturée obtenues en capturant l'image de la cible de surveillance est effectuée par le message de commande, et
l'émetteur-récepteur est configuré pour
transmettre les données d'image capturée à la destination de téléchargement en amont par l'intermédiaire de la deuxième session, et
transmettre, au premier serveur (10, 10a), des informations indiquant au deuxième serveur (5, 5a) si les données d'image capturée ont été téléchargées en amont avec succès.

4. Dispositif de communication (20) selon l'une quelconque des revendications 1 à 3, dans lequel
le contrôleur est configuré pour déterminer d'utiliser le deuxième protocole pour télécharger en aval des données lorsqu'une demande pour télécharger en aval les données à partir du deuxième serveur (5, 5a) est effectuée par le message de commande, et
l'émetteur-récepteur est configuré pour
recevoir, du deuxième serveur (5, 5a), les données à télécharger en aval par l'intermédiaire de la deuxième session, et
transmettre, au premier serveur (10, 10a) et par l'intermédiaire de la première session, des informations indiquant au deuxième serveur (5, 5a) si les données ont été téléchargées en aval avec succès.

5. Système de communication comprenant :
un dispositif de communication (20) configuré pour recevoir un message de commande d'un premier serveur (10, 10a) qui peut être connecté au dispositif de communication (20) par l'intermédiaire d'une première session en utilisant un premier protocole ; et
un deuxième serveur (5, 5a) configuré pour transmettre le message de commande au premier serveur (10, 10a) en utilisant le premier protocole, dans lequel
le dispositif de communication (20) est configuré pour
effectuer un traitement spécifié par le message de commande,
établir une deuxième session entre le dispositif de communication (20) et le deuxième serveur (5, 5a) lorsque le dispositif de communication (20) effectue une communication avec le deuxième serveur (5, 5a) en utilisant un deuxième protocole, une longueur d'en-tête du deuxième protocole étant plus grande qu'une longueur d'en-tête du premier protocole, la communication en utilisant le deuxième protocole ayant lieu du fait du traitement spécifié par le message de commande,
terminer la deuxième session lorsque la communication entre le dispositif de communication (20) et le deuxième serveur (5, 5a) en utilisant le deuxième protocole est terminée, et
transmettre un rapport au premier serveur (10, 10a) par l'intermédiaire de la première session, le rapport comprenant un résultat du traitement spécifié par le message de commande et des informations indiquant qu'une destination finale du rapport est le deuxième serveur (5, 5a).

6. Système de communication selon la revendication 5, comprenant en outre un terminal (15) configuré pour accéder au deuxième serveur (5), dans lequel
le deuxième serveur (5) est configuré pour
générer un message de commande qui effectue une demande pour télécharger en amont des données vers le deuxième serveur (5) lorsqu'une demande pour obtenir les données à partir du dispositif de communication (20) est effectuée par le terminal (15), et
transmettre le message de commande au premier serveur (10) en utilisant le premier protocole,
le dispositif de communication (20) est configuré pour déterminer d'utiliser le deuxième protocole pour télécharger en amont les données,
transmettre les données au deuxième serveur (5) par l'intermédiaire de la deuxième session, et
transmettre, au premier serveur (10) et par l'intermédiaire de la première session, des informations de rapport indiquant au deuxième serveur (5) si les données ont été téléchargées en amont avec succès, et
le deuxième serveur (5) est configuré pour rapporter un résultat d'obtention des données au terminal lorsque le deuxième serveur (5) obtient les informations de rapport par l'intermédiaire du premier serveur (10).

7. Système de communication selon la revendication 5 ou 6, dans lequel
le deuxième serveur (5, 5a) est configuré pour
générer un autre message de commande qui effectue une demande pour que le dispositif de communication (20) télécharge en aval des données à partir du deuxième serveur (5, 5a), et
transmettre l'autre message de commande au premier serveur (10, 10a) en utilisant le premier protocole,
le dispositif de communication (20) est configuré pour recevoir les données à télécharger en aval par l'intermédiaire de la deuxième session, et
transmettre, au premier serveur (10, 10a) et par l'intermédiaire de la première session, des informations indiquant au deuxième serveur (5, 5a) si les données ont été téléchargées en aval avec succès, et
le deuxième serveur (5, 5a) est configuré pour obtenir, par l'intermédiaire du premier serveur (10, 10a), les informations indiquant si les données ont été téléchargées en aval avec succès.

8. Procédé de communication comprenant :
la réception, par un dispositif de communication, d'un message de commande d'un premier serveur, le premier serveur ayant reçu le message de commande d'un deuxième serveur en utilisant un premier protocole, le premier serveur étant connecté au dispositif de communication par l'intermédiaire d'une première session en utilisant le premier protocole ;
l'exécution, par le dispositif de communication, d'un traitement spécifié par le message de commande ;
l'établissement, par le dispositif de communication, d'une deuxième session pour une communication en utilisant un deuxième protocole lorsqu'un traitement de communication est effectué entre le dispositif de communication et le deuxième serveur en utilisant le deuxième protocole, la deuxième session étant établie entre le dispositif de communication et le deuxième serveur, le traitement de communication ayant lieu du fait du traitement spécifié par le message de commande, une longueur d'en-tête du deuxième protocole étant plus grande qu'une longueur d'en-tête du premier protocole ;
l'exécution, par le dispositif de communication, d'une communication en utilisant le deuxième protocole par l'intermédiaire de la deuxième session ;
la terminaison, par le dispositif de communication, de la deuxième session lorsque la communication entre le dispositif de communication et le deuxième serveur en utilisant le deuxième protocole est terminée ; et
la transmission, par le dispositif de communication, d'un rapport au premier serveur par l'intermédiaire de la première session, le rapport comprenant un résultat du traitement spécifié par le message de commande et des informations indiquant qu'une destination finale du rapport est le deuxième serveur.

9. Procédé de communication selon la revendication 8, dans lequel
lorsqu'une demande pour télécharger en amont des données vers le deuxième serveur est effectuée par le message de commande, le dispositif de communication
détermine d'utiliser le deuxième protocole pour télécharger en amont les données,
obtient des informations concernant une destination de téléchargement en amont des données à partir du message de commande,
transmet les données à la destination de téléchargement en amont par l'intermédiaire de la deuxième session, et
transmet, au premier serveur, et par l'intermédiaire de la première session, des informations indiquant au deuxième serveur si les données ont été téléchargées en amont avec succès.

10. Procédé de communication selon la revendication 9, dans lequel
le dispositif de communication
comprend un dispositif de capture d'image configuré pour capturer une image d'une cible de surveillance,
génère des données d'une image capturée obtenues en capturant une image de la cible de surveillance lorsqu'une demande pour télécharger en amont les données d'image capturée est effectuée par le message de commande,
détermine d'utiliser le deuxième protocole lorsque les données d'image capturée sont transmises au deuxième serveur,
transmet les données d'image capturée à la destination de téléchargement en amont par l'intermédiaire de la deuxième session, et
transmet, au premier serveur, des informations indiquant au deuxième serveur si les données d'image capturée ont été téléchargées en amont avec succès.

11. Procédé de communication selon l'une quelconque des revendications 8 à 10, dans lequel
lorsqu'une demande pour télécharger en aval des données à partir du deuxième serveur est effectuée par le message de commande, le dispositif de communication
détermine d'utiliser le deuxième protocole pour télécharger en aval les données,
reçoit, du deuxième serveur, les données à télécharger en aval par l'intermédiaire la deuxième session, et
transmet, au premier serveur et par l'intermédiaire de la première session, des informations indiquant au deuxième serveur si les données ont été téléchargées en aval avec succès.

12. Programme d'ordinateur de communication comprenant des instructions qui, lorsque le programme est exécuté par un dispositif de communication, amènent le dispositif de communication à :
recevoir un message de commande d'un premier serveur, le premier serveur étant connecté au dispositif de communication par l'intermédiaire d'une première session en utilisant un premier protocole, qui a été utilisé par un deuxième serveur pour envoyer le message de commande au premier serveur ;
effectuer un traitement spécifié par le message de commande ;
établir une deuxième session pour une communication en utilisant un deuxième protocole lorsqu'un traitement de communication est effectué entre le dispositif de communication et le deuxième serveur en utilisant le deuxième protocole, la deuxième session étant établie entre le dispositif de communication et le deuxième serveur, le traitement de communication ayant lieu du fait du traitement spécifié par le message de commande, une longueur d'en-tête du deuxième protocole étant plus grande qu'une longueur d'entête du premier protocole ;
effectuer une communication en utilisant le deuxième protocole par l'intermédiaire de la deuxième session ;
terminer la deuxième session lorsque la communication entre le dispositif de communication et le deuxième serveur en utilisant le deuxième protocole est terminée ; et
transmettre un rapport au premier serveur par l'intermédiaire de la première session, le rapport comprenant un résultat du traitement spécifié par le message de commande et des informations indiquant qu'une destination finale du rapport est le deuxième serveur.

13. Programme de communication selon la revendication 12, dans lequel
lorsqu'une demande pour télécharger en amont des données vers le deuxième serveur est effectuée par le message de commande, le programme de communication amène le dispositif de communication à :
déterminer d'utiliser le deuxième protocole pour télécharger en amont les données ;
obtenir des informations concernant une destination de téléchargement en amont des données à partir du message de commande ;
transmettre les données à la destination de téléchargement en amont par l'intermédiaire de la deuxième session ; et
transmettre, au premier serveur et par l'intermédiaire de la première session, des informations indiquant au deuxième serveur si les données ont été téléchargées en amont avec succès.

14. Programme de communication selon la revendication 12 ou 13, dans lequel
lorsqu'une demande pour télécharger en aval des données à partir du deuxième serveur est effectuée par le message de commande, le programme de communication amène le dispositif de communication à :
déterminer d'utiliser le deuxième protocole pour télécharger en aval les données ;
recevoir, du deuxième serveur, les données à télécharger en aval par l'intermédiaire de la deuxième session ; et
transmettre, au premier serveur et par l'intermédiaire de la première session, des informations indiquant au deuxième serveur si les données ont été téléchargées en aval avec succès.
